# EUROPÄISCHE PATENTSCHRIFT

(11) **EP 3 400 149 B1**
(45) Veröffentlichungstag und Bekanntmachung des Hinweises auf die Patenterteilung: **04.12.2019**
(21) Anmeldenummer: 16787351.2
(22) Anmeldetag: 04.10.2016
(51) Int. Cl.: B60N 2/16, B60N 2/18, B60N 2/42, B60N 2/427

(54) **FAHRZEUGSITZ MIT EINEM HÖHENEINSTELLER**
VEHICLE SEAT WITH A HEIGHT ADJUSTER
SIÈGE DE VÉHICULE AVEC AJUSTEMENT EN HAUTEUR

(30) Priorität: 08.01.2016 DE 102016200124
(43) Veröffentlichungstag der Anmeldung: 14.11.2018
(73) Patentinhaber: Adient Luxembourg Holding S.à r.l., 1855 Luxembourg (LU)
(72) Erfinder: GILMANN, Alexander, 45470 Muelheim/Ruhr (DE); ARNDT, Thomas, 40789 Monheim (DE)
(74) Vertreter: Liedhegener, Ralf
(86) Internationale Anmeldenummer: PCT/EP2016/073650
(87) Internationale Veröffentlichungsnummer: WO 2017/118496

(56) Entgegenhaltungen:
- WO-A1-2013/087415
- DE-A1-102007 039 862
- DE-B3-102014 202 086
- US-A1- 2014 265 470

## Beschreibung

Die Erfindung betrifft einen Fahrzeugsitz, insbesondere Kraftfahrzeugsitz, mit einer Basis, einem Sitzkissen und einem Höheneinsteller zum Einstellen eines Abstandes zwischen der Basis und dem Sitzkissen, insbesondere in einer Vertikalrichtung, wobei der Höheneinsteller wenigstens eine Schwinge aufweist, die um eine erste Drehachse relativ zu der Basis drehbar ist, und sich in Richtung einer zu der ersten Drehachse parallel versetzten zweiten Drehachse erstreckt, wobei die wenigstens eine Schwinge zwischen der ersten Drehachse und der zweiten Drehachse wenigstens abschnittsweise einen Bereich mit einem abgewinkelten Querschnitt aufweist, wobei der abgewinkelte Querschnitt einen ersten Flansch und einen zweiten Flansch aufweist.

### Stand der Technik

Aus der DE 20 2005 009 185 U1 ist eine Fahrzeugsitz mit einem Höheneinsteller bekannt, bestehend aus einem Sitzunterteil, das einen Bestandteil der Sitzstruktur eines Kraftfahrzeugsitzes bildet, einer das Sitzunterteil tragenden Schiene, einer vorderen und einer hinteren Schwinge, welche jeweils über Gelenke nach Art eines Viergelenks mit der Schiene und dem Sitzunterteil verbunden sind, und einem Endanschlag, welcher einer der Schwingen zugeordnet ist, wobei der Endanschlag einem über das Gelenk hinaus verlängertem Bereich einer Schwinge zugeordnet ist.

Die DE 10 2013 106 250 A1 offenbart eine Fahrzeugsitzunterkonstruktion mit einer unfallinduzierten Verstellvorrichtung, umfassend ein Sitzschienenpaar, aufweisend eine verschiebbar gegenüber einer Sitzunterschiene angeordneten Sitzoberschiene, und eine über ein Beschlagelement verschwenkbar an der Sitzoberschiene angeordnete Sitzstruktur, wobei das Beschlagelement derart ausgebildet und an der Sitzoberschiene sowie an der Sitzstruktur angeordnet ist, dass bei einem Unfall ein an dem Beschlagelement angeordnetes Feststellelement in eine die Sitzoberschiene an der Sitzunterschiene arretierende Verriegelungsposition gelangt.

Aus der DE 10 2007 039 862 A1 ist eine Sitzhöhenverstelleinrichtung für einen Kraftfahrzeugsitz bekannt, mit einem Sitzträger, mit einem Befestigungsträger und mit einem sich entlang einer Längsachse erstreckenden Schwenkträger, der um eine erste Achse senkrecht zur Längsachse schwenkbar über eine erste Anlenkstelle an dem Befestigungsträger angelenkt ist, und der um eine zur ersten Achse parallelen zweiten Achse schwenkbar über eine zweite Anlenkstelle an dem Sitzträger angelenkt ist, wobei der Schwenkträger entlang der Längsachse zwischen den Anlenkstellen einen Teilbereich mit einer quer zur Längsachse reduzierten Breite umfasst.

Die DE 10 2005 060 480 A1 offenbart einen Kraftfahrzeugsitz mit vorderen und hinteren Lenkern zur Parallelhöhenverstellung, wobei zumindest die vorderen oder die hinteren Lenker mit ihren unteren Enden gelenkig an ein oberes Ende einer Konsole angeschlagen sind, die an ihrem unteren Ende starr mit der Oberschiene einer Sitzlängsverstellung verbunden ist, und von dieser nach oben abragt, wobei die Konsole durch ein Stützblech verstärkt ist, dessen unteres Ende mit der Oberschiene verschweißt ist, und welches über mindestens eine Steckverbindung mit der Konsole verbunden ist.

Die WO 2013/087415 A1 und die DE 10 2014 202 086 B3 zeigen einen Fahrzeugsitz, insbesondere Kraftfahrzeugsitz, mit einer Basis, einem Sitzkissen und einem Höheneinsteller zum Einstellen eines Abstandes zwischen der Basis und dem Sitzkissen in einer Vertikalrichtung, wobei der Höheneinsteller eine Schwinge aufweist, die um eine erste Drehachse relativ zu der Basis drehbar ist, und sich in Richtung einer zu der ersten Drehachse parallel versetzten zweiten Drehachse erstreckt, wobei die wenigstens eine Schwinge zwischen der ersten Drehachse und der zweiten Drehachse wenigstens abschnittsweise einen Bereich mit einem abgewinkelten Querschnitt aufweist, wobei der abgewinkelte Querschnitt einen ersten Flansch und einen zweiten Flansch aufweist, wobei zwischen dem ersten Flansch und dem zweiten Flansch wenigstens abschnittsweise eine Öffnung angeordnet ist.

### Aufgabe

Der Erfindung liegt die Aufgabe zu Grunde, einen Fahrzeugsitz mit einem Höheneinsteller der eingangs genannten Art zu verbessern. Insbesondere soll das Deformationsverhalten des Fahrzeugsitzes bei einem Heckaufprall verbessert werden. Insbesondere soll die Gefahr eines Schleudertraumas eines Insassen bei einem Heckaufprall verringert werden. Insbesondere soll ein Bewegungsablauf eines Insassen bei einem Heckaufprall derart sein, dass ein Abstand zwischen dem Kopf des Insassen und einer B-Säule des Fahrzeugs erhalten bleibt.

### Lösung

Diese Aufgabe wird erfindungsgemäß gelöst durch einen Fahrzeugsitz nach Anspruch 1, insbesondere Kraftfahrzeugsitz, mit einer Basis, einem Sitzkissen und einem Höheneinsteller zum Einstellen eines Abstandes zwischen der Basis und dem Sitzkissen, insbesondere in einer Vertikalrichtung, wobei der Höheneinsteller wenigstens eine Schwinge aufweist, die um eine erste Drehachse relativ zu der Basis drehbar ist, und sich in Richtung einer zu der ersten Drehachse parallel versetzten zweiten Drehachse erstreckt, wobei die wenigstens eine Schwinge zwischen der ersten Drehachse und der zweiten Drehachse wenigstens abschnittsweise einen Bereich mit einem abgewinkelten Querschnitt aufweist, wobei der abgewinkelte Querschnitt einen ersten Flansch und einen zweiten Flansch aufweist, wobei zwischen dem ersten Flansch und dem zweiten Flansch wenigstens abschnittsweise eine Öffnung angeordnet ist.

Dadurch, dass zwischen dem ersten Flansch und dem zweiten Flansch wenigstens abschnittsweise eine Öffnung angeordnet ist, lässt sich das Deformationsverhalten des Fahrzeugsitzes bei einem Heckaufprall gezielt beeinflussen. Dadurch lässt sich ein Abstand zwischen dem Kopf eines Insassen und einer B-Säule des Fahrzeugs im Falle eines Heckaufpralls ausreichend erhalten.

Vorteilhafte Ausgestaltungen, welche einzeln oder in Kombination miteinander eingesetzt werden können, sind Gegenstand der Unteransprüche.

Der Höheneinsteller weist vorzugsweise wenigstens eine Viergelenkkette auf. Der Höheneinsteller weist vorzugsweise beidseitig jeweils eine Viergelenkkette auf. Die wenigstens eine Schwinge kann Bestandteil wenigstens einer der Viergelenkketten sein. Eine Einstellung der Viergelenkkette kann außer einer Änderung des Abstandes zwischen der Basis und dem Sitzkissen in einer Vertikalrichtung, auch eine überlagerte Bewegung des Sitzkissens relativ zur Basis in einer Längsrichtung bewirken und/oder eine Änderung der relativen Winkellage zwischen Basis und Sitzkissen. Diese überlagerten Bewegungen ergeben sich insbesondere durch die Längen und die Drehpunkte der Schwingen.

Die wenigstens eine Schwinge kann zwischen einer Basis und einem Sitzrahmen des Fahrzeugsitzes angeordnet sein. Der Höheneinsteller kann eine Viergelenkanordnung mit beidseitig jeweils einer vorderen und einer hinteren Schwinge sein, wobei insbesondere genau eine der beiden hinteren Schwingen einen abgewinkelten Querschnitt mit einem ersten Flansch und einem zweiten Flansch aufweist, wobei zwischen dem ersten Flansch und dem zweiten Flansch wenigstens abschnittsweise eine Öffnung angeordnet ist. Viergelenk-Höheneinsteller sind an sich bekannt.

Die wenigstens eine Schwinge ist vorzugsweise auf der einer Fahrzeugmitte zugewandten Seite des Fahrzeugsitzes angeordnet. Auf der gegenüberliegenden Sitzseite kann eine aus dem Stand der Technik bekannte Schwinge vorgesehen sein.

Die Öffnung ist vorzugsweise ein Langloch. Die Öffnung kann jedoch auch kreisrund oder polygonförmig sein. Die Öffnung kann ein Langloch sein, das weitgehend parallel zu einer eine erste Drehachse der Schwinge mit einer zweiten Drehachse der Schwinge verbindenden imaginären Verbindungslinie ausgerichtet ist. Die imaginäre Verbindungslinie kann eine erste Richtung eines Schwingen-Koordinatensystems definieren. Eine zweite Richtung kann parallel zu einer Fahrzeugquerrichtung und senkrecht zur ersten Richtung sein. Eine dritte Richtung kann senkrecht zur ersten Richtung und senkrecht zur zweiten Richtung sein.

Vorzugsweise verläuft der zweite Flansch überwiegend parallel zu einer aus der ersten Richtung und der dritten Richtung des Schwingen-Koordinatensystems aufgespannten Ebene. Vorzugsweise verläuft der zweite Flansch weitgehend senkrecht zu einer Fahrzeugquerrichtung und/oder senkrecht zur zweiten Richtung des Schwingen-Koordinatensystems.

Vorzugsweise ist der erste Flansch wenigstens abschnittsweise senkrecht zu dem zweiten Flansch angeordnet. Dadurch ist eine hohe Grundsteifigkeit gegeben. Die wenigstens eine Schwinge kann derart gestaltet sein, dass der erste Flansch und der zweite Flansch L-förmig zueinander angeordnet sind.

Nach einer unfallbedingten Deformation der wenigstens einen Schwinge liegt der erste Flansch auf dem zweiten Flansch auf. Dadurch steigt die Steifigkeit der wenigstens einen Schwinge nach einer definierten Verformung sprungartig an.

Der erste Flansch weist vorzugsweise eine erste Vertiefung auf. Die erste Vertiefung kann eine Einbuchtung sein. Die erste Vertiefung kann stetig verlaufen. Die erste Vertiefung kann wenigstens abschnittsweise annähernd kreisförmig sein. Die erste Vertiefung kann als Knickstelle wirken. Die erste Vertiefung steuert eine Deformation der hinteren Schwinge um die zweite Richtung, und steuert zudem eine Stauchung der hinteren Schwinge bei unfallbedingt auftretenden Lasten, insbesondere bei einem Heckaufprall. Die erste Vertiefung ist vorzugsweise zu einer imaginären Verbindungslinie, die die erste Drehachse der Schwinge mit der zweiten Drehachse der Schwinge verbindet, hin orientiert.

Der erste Flansch kann im Bereich der ersten Vertiefung zusätzlich in oder entgegen der zweiten Richtung gekrümmt sein. Der erste Flansch kann eine zweite Vertiefung aufweisen, die in eine zweite Richtung gekrümmt ist. Die zweite Vertiefung kann senkrecht zu der ersten Vertiefung verlaufen. Die erste Vertiefung und die zweite Vertiefung können einander überlagern.

Die erste Vertiefung und die zweite Vertiefung können in der ersten Richtung zueinander versetzt angeordnet sein. Die erste Drehachse der wenigstens einen Schwinge kann durch ein Lagerauge der wenigstens einen Schwinge definiert sein. Die zweite Drehachse kann durch eine Aufnahmeöffnung in der wenigstens einen Schwinge definiert sein.

Anders und zusammenfassend ausgedrückt, kann mit einem erfindungsgemäßen Fahrzeugsitz vermieden werden, dass bei einem Heckcrash oder Whiplash der Kopf eines Dummys, beziehungsweise eines Insassen, einer B-Säule des Fahrzeugs zu nahe kommt. Um ein Annähern des Kopfes an die B-Säule zu vermeiden, kann die Bewegung des Dummys mit dem erfindungsgemäßen Fahrzeugsitz gezielt durch Steuerelemente beeinflusst werden. Als Steuerelemente können eine oder beide hinteren Schwingen des Fahrzeugsitzes verwendet werden. Die Steuerung der Steifigkeit wenigstens einer der Schwingen erlaubt die Rückenlehne und das Sitzkissen im Heckcrash in Positionen zu halten, bei denen der Kopf des Dummys einen ausreichenden Abstand zur B-Säule hat. Bei aus dem Stand der Technik bekannten Fahrzeugsitzen verformt eine der Tunnelseite des Fahrzeugs zugewandte Schwinge bei einem Heckcrash nicht oder nur minimal und der Kopf des Dummys bewegt sich zu nahe an die B-Säule heran. Damit der Kopf des Dummys diese Bewegung nicht macht, das heißt nicht zu nahe an die B-Säule heran kommt, muss sich die tunnelseitige Schwinge beim Heckcrash derart verformen, dass sie sich, insbesondere entlang einer Fahrzeuglängsachse, zusammenstaucht, wobei eine Biegung in Fahrzeugquerrichtung stattfindet, so dass sich ein die hinteren Schwingen verbindendes Querrohr während einer Deformation des Fahrzeugsitzes zusätzlich in Richtung der Sitzmitte beziehungsweise der Fahrzeugmitte verschiebt.

Die Erfindung löst zwei gegenläufige Anforderungen an die Konstruktion der hinteren tunnelseitigen Schwinge. Diese hintere Schwinge muss ausreichend fest für einen Frontalaufprall sein, und sich bei einem Heckaufprall oder Whiplash verhältnismäßig leicht in die Fahrzeugquerrichtung verformen können und sich in Fahrzeuglängsrichtung ohne Bruch stark stauchen. Um diese Anforderungen zu erfüllen, ist die hintere Schwinge auf der Tunnelseite, durch die erfindungsgemäße Gestaltung, eine Konstruktion, bei der sich die Steifigkeiten gegen Biegung in einem breiten Bereich anpassen lassen. Die hintere Schwinge lässt sich in Fahrzeuglängsrichtung leicht zusammenstauchen. Vorzugsweise steigt die Steifigkeit nach einer definierten Verformung sprungartig, nämlich dann wenn sich der erste Flansch und der zweite Flansch gegenseitig abstützen.

### Figuren und Ausführungsformen der Erfindung

Im Folgenden ist die Erfindung anhand von in den Figuren dargestellten vorteilhaften Ausführungsbeispielen näher erläutert. Die Erfindung ist jedoch nicht auf diese Ausführungsbeispiele beschränkt. Es zeigen:
- Fig. 1:: schematisch eine Seitenansicht eines erfindungsgemäßen Fahrzeugsitzes,
- Fig. 2:: ein erstes Ausführungsbeispiel einer hinteren Schwinge des Fahrzeugsitzes aus Fig. 1 in einer perspektivischen Ansicht,
- Fig. 3:: eine Draufsicht auf die hintere Schwinge aus Fig. 2,
- Fig. 4:: eine Seitenansicht auf die hintere Schwinge aus Fig. 2,
- Fig. 5:: einen Schnitt durch die hintere Schwinge aus Fig. 2 entlang der Linie V-V in Fig. 3,
- Fig. 6:: eine perspektivische Ansicht auf die hintere Schwinge aus Fig. 2 in einem nicht verformten und in einem deformierten Zustand, wobei der deformierte Zustand gestrichelt dargestellt ist,
- Fig. 7:: ein zweites Ausführungsbeispiel einer hinteren Schwinge des Fahrzeugsitzes aus Fig. 1 in einer perspektivischen Ansicht,
- Fig. 8:: eine Seitenansicht auf die hintere Schwinge aus Fig. 7, und
- Fig. 9:: eine perspektivische Ansicht auf die hintere Schwinge aus Fig. 7 in einem nicht verformten und in einem deformierten Zustand, wobei der deformierte Zustand gestrichelt dargestellt ist.

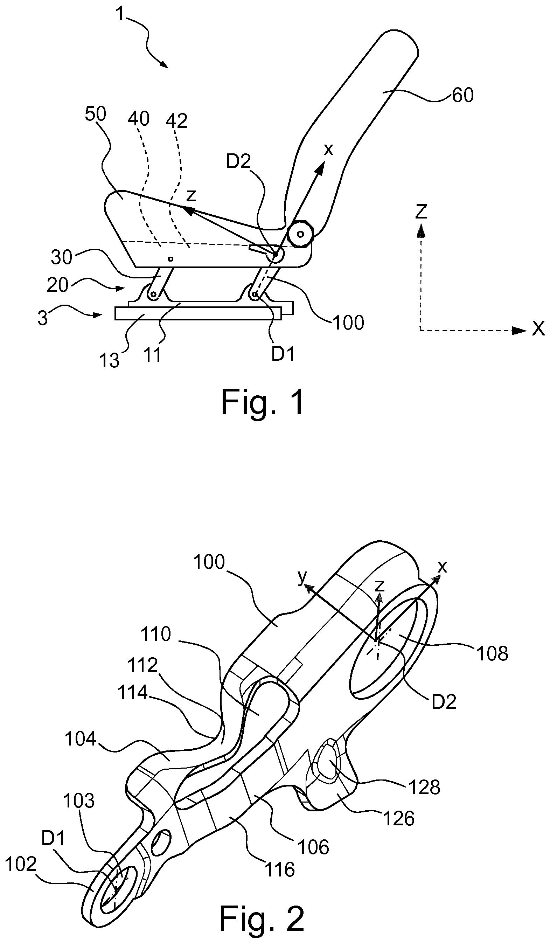

Ein in Figur 1 schematisch dargestellter Fahrzeugsitz 1 für ein Kraftfahrzeug ist mit einer Basis 3, vorliegend zwei Sitzschienenpaaren, am Fahrzeugboden des Kraftfahrzeugs befestigt. Der Fahrzeugsitz 1 ist nachfolgend unter Verwendung eines Fahrzeugkoordinatensystems mit drei senkrecht zueinander verlaufenden Raumrichtungen beschrieben. Eine Längsrichtung X verläuft bei einem im Fahrzeug eingebauten Fahrzeugsitz 1 weitgehend horizontal und vorzugsweise entgegen und parallel zu einer Fahrzeuglängsrichtung, die der gewöhnlichen Fahrtrichtung des Fahrzeugs entspricht. Eine zu der Längsrichtung X senkrecht verlaufende Querrichtung ist im Fahrzeug ebenfalls horizontal ausgerichtet und verläuft parallel zu einer Fahrzeugquerrichtung. Eine Vertikalrichtung Z verläuft senkrecht zu der Längsrichtung X und senkrecht zu der Querrichtung. Bei einem im Fahrzeug eingebauten Fahrzeugsitz 1 verläuft die Vertikalrichtung Z parallel zu der Fahrzeughochachse.

Die verwendeten Positions- und Richtungsangaben, wie beispielsweise vorne, hinten, oben und unten beziehen sich auf eine Blickrichtung eines im Fahrzeugsitz 1 sitzenden Insassen in normaler Sitzposition, wobei der Fahrzeugsitz 1 im Fahrzeug eingebaut, in einer zur Personenbeförderung geeigneten Gebrauchsposition und wie üblich in Fahrtrichtung ausgerichtet ist. Der erfindungsgemäße Fahrzeugsitz 1 kann jedoch auch in abweichender Ausrichtung, beispielsweise quer zur Fahrtrichtung verbaut werden.

Der Fahrzeugsitz 1 ist mittels der beiden in Längsrichtung X ausgerichteten und an sich bekannten Sitzschienenpaare in Längsrichtung X längsverschiebbar an dem Fahrzeugboden angebunden. Die beiden Sitzschienenpaare umfassen zwei relativ zur Fahrzeugstruktur bewegliche, parallel zueinander angeordnete erste Schienen 11 und zwei zugeordnete, fahrzeugbodenfeste, zweite Schienen 13, welche die ersten Schienen 11 umgreifen und führen. Mittels jeweils einer an sich bekannten Sitzschienen-Verriegelungsvorrichtung können die jeweils ersten Schienen 11 mit den jeweils zweiten Schienen 13 verriegelt werden. Bei entriegelten Sitzschienen-Verriegelungsvorrichtungen können die ersten Schienen 11 relativ zu den zweiten Schienen 13 verschoben und damit die Position des Fahrzeugsitzes 1 relativ zur Fahrzeugstruktur in Längsrichtung X verändert werden.

Ein Höheneinsteller 20 des Fahrzeugsitzes 1 weist auf beiden Seiten des Fahrzeugsitzes1 je eine Viergelenkkette auf, welche aus einem Bauteil der Basis 3, vorliegend der ersten Schiene 11, einer vorderen Schwinge 30, einer hinteren Schwinge 100 und einem Sitzrahmen 40 gebildet ist, die jeweils mittels Gelenken zu der Viergelenkkette miteinander verbunden sind. Der Sitzrahmen 40 trägt ein Sitzkissen 50 und eine Rückenlehne 60. Mittels des Höheneinstellers 20 ist die Höhe des Sitzkissens 50, und somit zugleich der Rückenlehne 60, über dem Fahrzeugboden, und damit über der Basis 3, einstellbar. Ein Antrieb des Höheneinstellers 20 kann mittels einer manuellen Antriebseinrichtung erfolgen, wie beispielsweise aus der WO 2010/105737 A1 bekannt, oder mittels einer elektrifizierten Antriebseinrichtung, wie beispielsweise aus der DE 10 2010 002 278 A1 bekannt.

Der Sitzrahmen 40 umfasst ein in den Figuren nicht dargestelltes, parallel zur Querrichtung verlaufendes, vorderes Querrohr, sowie zwei weitgehend parallel zur Längsrichtung X verlaufende Sitzrahmenseitenteile 42. Der Abstand in Querrichtung zwischen den beiden Sitzrahmenseitenteilen 42 entspricht vorzugsweise annähernd der Länge des vorderen Querrohrs. Die beiden Sitzrahmenseitenteile 42 sind mit dem vorderen Querrohr verschweißt. Ein in den Figuren nicht dargestelltes hinteres Querrohr verläuft parallel zur Querrichtung und ist mittels Lagerbuchsen drehbar in hinteren Bereichen der Sitzrahmenseitenteile 42 gelagert. Eines der beiden Enden des hinteren Querrohrs ist mit einer nachfolgend beschriebenen hinteren Schwinge 100 drehfest verbunden, vorzugsweise verschweißt. Das andere Ende des hinteren Querrohrs ist mit einer weiteren hinteren Schwinge verbunden, deren Drehachsen mit den Drehachsen der in Querrichtung gegenüberliegenden hinteren Schwinge 100 übereinstimmen, wobei die Formgebung der weiteren hinteren Schwinge jedoch vorzugsweise unterschiedlich zu der hinteren Schwinge 100 ist.

Die nachfolgend anhand der Figuren 2 bis 6 beschriebene hintere Schwinge 100 ist in einem in das Kraftfahrzeug montierten Zustand des Fahrzeugsitzes 1 der Fahrzeugmitte, vorzugsweise einem Tunnel, zugewandt.

Die Figuren 2 bis 6 zeigen eine hintere Schwinge 100 eines ersten Ausführungsbeispiels. Die hintere Schwinge 100 ist nachfolgend unter Verwendung eines Schwingen-Koordinatensystems mit drei senkrecht zueinander verlaufenden Raumrichtungen beschrieben. Eine erste Richtung x verläuft in einer durch die Längsrichtung X und die Vertikalrichtung Z aufgespannten Ebene und parallel zu einer imaginären Verbindungslinie, die eine erste Drehachse D1 der hinteren Schwinge 100 mit einer zweiten Drehachse D2 der hinteren Schwinge 100 verbindet. Eine zweite Richtung y verläuft parallel zur Querrichtung des Fahrzeugkoordinatensystems und senkrecht zur ersten Richtung x. Eine dritte Richtung z verläuft senkrecht zu der ersten Richtung x und senkrecht zu der zweiten Richtung y. Das Schwingen-Koordinatensystem ist gegenüber dem Fahrzeugkoordinatensystem um die Querrichtung gedreht, wobei sich ein Relativwinkel zwischen den Koordinatensystemen aus der Winkellage der hinteren Schwinge 100 und somit aus der Einstellposition des Höheneinstellers 20 ergibt.

Die hintere Schwinge 100 ist ein umgeformtes Blechbauteil, vorzugsweise aus Stahlblech. Ein Lagerauge 102 ist ein weitgehend ebener, parallel zu der ersten Richtung x und parallel zu der dritten Richtung z ausgerichteter Abschnitt der hinteren Schwinge 100. Das Lagerauge 102 weist eine Lageröffnung 103 auf, deren Mittelpunkt auf der ersten Drehachse D1 liegt. Die erste Drehachse D1 der hinteren Schwinge 100 ist somit durch das Lagerauge 102 der hinteren Schwinge 100 definiert. Die hintere Schwinge 100 ist in an sich bekannter Weise mittels des Lagerauges 102 drehbar zur Basis 3, vorliegend zur ersten Schiene 11, gelagert. Dazu kann an der ersten Schiene 11 ein Lageradapter befestigt sein.

Die hintere Schwinge 100 weist zudem einen ersten Flansch 104 und einen zweiten Flansch 106 auf. Der erste Flansch 104 und der zweite Flansch 106 weisen bis auf die nachfolgend abweichend beschriebenen Abschnitte eine jeweils weitgehend ebene Gestalt auf. Der erste Flansch 104 und der zweite Flansch 106 sind zueinander abgewinkelt angeordnet. Vorliegend schließen der erste Flansch 104 und der zweite Flansch 106 einen Winkel von 90° zueinander ein.

Ausgehend von dem Lagerauge 102 erstreckt sich der zweite Flansch 106 in Richtung der zweiten Drehachse D2 und über diese hinaus. Der zweite Flansch 106 verläuft dabei weitgehend parallel zur ersten Richtung x und weitgehend parallel zur dritten Richtung z. Der zweite Flansch 106 weist eine Aufnahmeöffnung 108 auf, deren Mittelpunkt auf der zweiten Drehachse D2 liegt. Die zweite Drehachse D2 der hinteren Schwinge 100 ist somit durch die Aufnahmeöffnung 108 der hinteren Schwinge 100 definiert. Die Aufnahmeöffnung 108 nimmt das hintere Querrohr. Das hintere Querrohr ist in diesem Bereich mit der hinteren Schwinge 100 verschweißt.

Ausgehend von dem Lagerauge 102 erstreckt sich der erste Flansch 104 parallel zur ersten Richtung x in Richtung der Aufnahmeöffnung 108 und annähernd tangential an eine Umgrenzung der Aufnahmeöffnung 108. Der erste Flansch 104 verläuft zwischen dem Lagerauge 102 und dem Berührungspunkt an die Umgrenzung der Aufnahmeöffnung 108 weitgehend parallel zur ersten Richtung x und weitgehend parallel zur zweiten Richtung y. Im weiteren Verlauf umschließt der erste Flansch 104 die Aufnahmeöffnung um etwa 35°. Der erste Flansch 104 ist in der dritten Richtung z betrachtet am oberen Ende des zweiten Flanschs 106 angeordnet. Der erste Flansch 104 und der zweite Flansch 106 sind senkrecht zueinander angeordnet.

Zwischen dem ersten Flansch 104 und dem zweiten Flansch 106 ist abschnittweise ein Langloch 110 angeordnet, so dass der erste Flansch 104 und der zweiten Flansch 106 in diesem Abschnitt nicht miteinander verbunden sind. Das Langloch 110 erstreckt sich vorliegend über eine Länge von annähernd 40% des Abstands zwischen den Drehachsen D1, D2. Dabei ist das Langloch 110 in der ersten Richtung x betrachtet annähernd mittig zwischen den Drehachsen D1, D2 angeordnet. In Abwandlungen des ersten Ausführungsbeispiels sind die Länge und/oder Breite des Langlochs 110 und die Position zwischen den Drehachsen D1, D2 abweichend zum ersten Ausführungsbeispiel. Die Länge und die Breite des Langlochs 110 beeinflussen die Biegesteifigkeit der hinteren Schwinge 100 um die zweite Achse y und um die dritte Achse z.

Der erste Flansch 104 weist im Bereich des Langlochs 110 eine erste Vertiefung 112 auf. Die erste Vertiefung 112 ist eine Einbuchtung des ersten Flansches 104. Die erste Vertiefung 112 verläuft auf eine die erste Drehachse D1 mit der zweiten Drehachse D2 verbindenden imaginären Verbindungslinie zu, ohne diese zu erreichen. Die erste Vertiefung 112 wirkt unter unfallbedingter Belastung als eine Knickstelle des ersten Flanschs 104. Die erste Vertiefung 112 steuert eine Deformation der hinteren Schwinge 100 um die zweite Richtung y und eine Stauchung der hinteren Schwinge 100 in der ersten Richtung x bei unfallbedingt auftretenden Lasten, insbesondere bei einem Heckaufprall.

Der erste Flansch 104 weist vorliegend im Bereich der ersten Vertiefung 112 zusätzlich eine der ersten Vertiefung 112 überlagerte zweite Vertiefung 114 auf. Die zweite Vertiefung 114 ist eine Einbuchtung in einer zur zweiten Richtung y parallelen Richtung, so dass der erste Flansch 104 im Bereich der ersten Vertiefung 112 zusätzlich um eine zur dritten Richtung z parallele Achse gekrümmt ist. Die zweite Vertiefung 114 steuert eine Deformation der hinteren Schwinge 100 um die dritte Richtung z und eine Stauchung der hinteren Schwinge 100 bei unfallbedingt auftretenden Lasten, insbesondere bei einem Heckaufprall. Die zweite Vertiefung 114 kann optional entfallen.

Der zweite Flansch 106 weist im Bereich des Langlochs 110 eine dritte Vertiefung 116 auf. Die dritte Vertiefung 116 ist eine Einbuchtung des zweiten Flanschs 106. Die dritte Vertiefung 116 ist um eine zur dritten Richtung z parallele Achse gekrümmt. Die dritte Vertiefung 116 wirkt unter unfallbedingter Belastung als eine Knickstelle des zweiten Flanschs 106. Die dritte Vertiefung 116 steuert eine Deformation der hinteren Schwinge 100 um die dritte Richtung z bei unfallbedingt auftretenden Lasten, insbesondere bei einem Heckaufprall.

Vorliegend ist die erste Vertiefung 112 gegenüber dritten Vertiefung 116 in erster Richtung x betrachtet um einen ersten Abstand 118 versetzt angeordnet. Die Größe des ersten Abstands 118 beeinflusst das Verhältnis der Deformation um die zweite Achse y und der Deformation um die dritte Achse z. Eine Distanz der ersten Vertiefung 112 zu der zweiten Drehachse D2 ist geringer als eine Distanz der dritten Vertiefung 116 zu der zweiten Drehachse D2.

Vorliegend ist das Lagerauge 102 gegenüber dem die Aufnahmeöffnung 108 aufweisenden Bereich in zweiter Richtung y betrachtet um einen zweiten Abstand 120 versetzt angeordnet. Ein entsprechender Versatz ist in dem zweiten Flansch 106 im Bereich der dritten Vertiefung 116 vorgesehen. Der zweite Abstand 120 erhöht die Deformation der hinteren Schwinge 100 um die dritte Richtung z bei unfallbedingt auftretenden Lasten. Der zweite Abstand 120 kann in einer Abwandlung des Ausführungsbeispiels auch entfallen.

Zwischen dem Lagerauge 102 und dem Langloch 110 weist der zweite Flansch 106 eine Aussparung 122 in Form einer länglichen Öffnung auf, mittels deren Abmessungen das Deformationsverhalten der hinteren Schwinge 100 zusätzlich konstruktiv ausgelegt und beeinflusst werden kann. Die Aussparung 122 kann in einer Abwandlung des Ausführungsbeispiels auch entfallen.

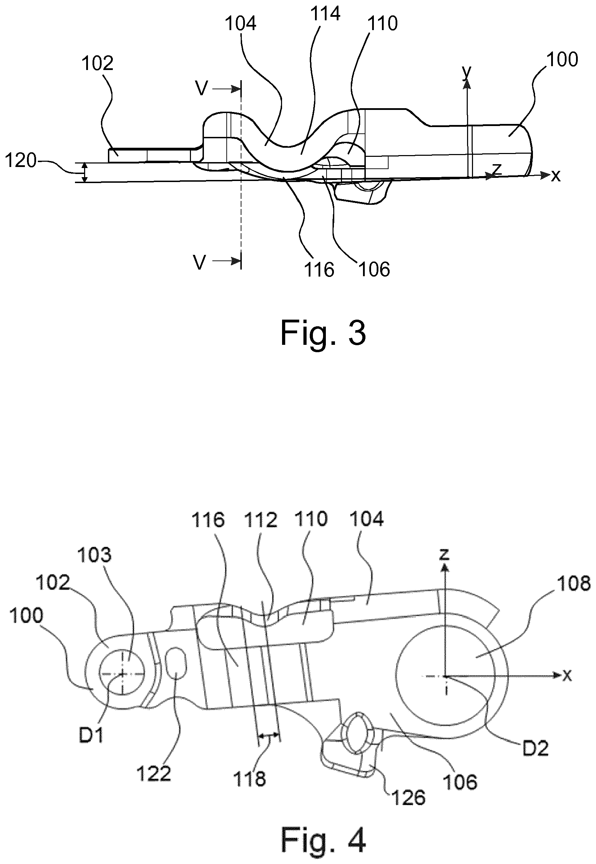

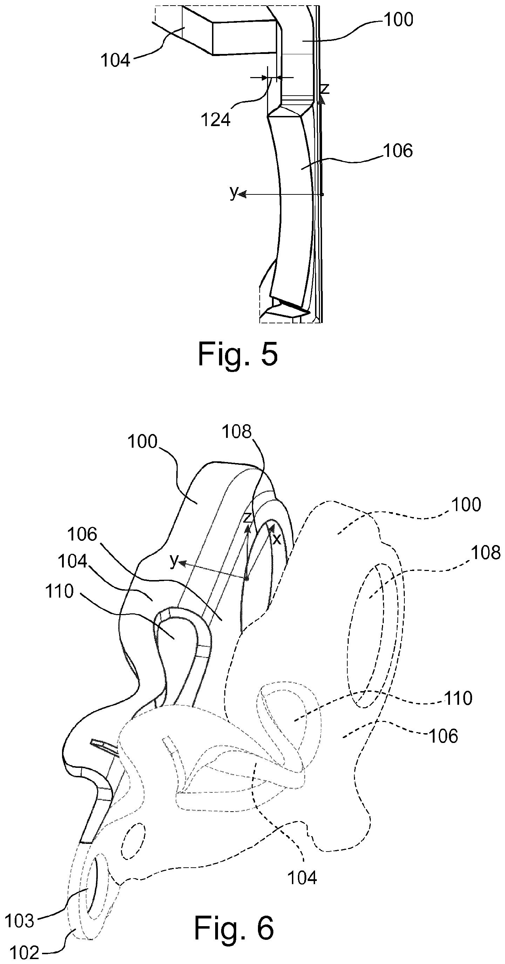

Figur 5 zeigt einen Schnitt durch die hintere Schwinge 100 entlang der Linie V - V in Figur 3. Man erkennt, dass sich das Material des ersten Flanschs 104 und des zweiten Flanschs 106 im Bereich der zweiten Vertiefung 114 um eine Überdeckung 124 in Richtung der zweiten Richtung y überlappen. Die Überdeckung 124, die Aussparung 122 und das Langloch 110 haben wesentlichen Einfluss auf das Deformationsverhalten der hinteren Schwinge 100.

Figur 6 zeigt die hintere Schwinge 100 in einem nicht deformierten Zustand und in gestrichelter Darstellung in einem deformierten Zustand, insbesondere nach einem Heckaufprall. Man erkennt, dass der erste Flansch 104 im deformierten Zustand im Bereich des Langlochs 110 auf dem zweiten Flansch 106 aufliegt. Sobald der erste Flansch 104 während der Deformation auf dem zweiten Flansch 106 aufliegt, wird die Steifigkeit der hinteren Schwinge 100 sprunghaft erhöht und eine weitere Deformation der hinteren Schwinge 100 wesentlich erschwert. Zudem wird die Aufnahmeöffnung 108 und somit das hintere Querrohr entgegen der zweiten Richtung y verlagert.

Vorliegend weist die hintere Schwinge 100 einen Abstütznocken 126 auf, der von dem zweiten Flansch 106 ausgehend in einer von dem ersten Flansch 104 abgewandten Richtung von dem zweiten Flansch 106 absteht. Der Abstütznocken 126 ist mittels einer Sicke 128 versteift. In der niedrigsten Höheneinstellposition des Fahrzeugsitzes 1 stützt sich der Abstütznocken 126 an der Basis 3, insbesondere der ersten Schiene 11, ab. Alternativ stützt sich der Abstütznocken 126 nur aufgrund einer Deformation des Fahrzeugsitzes 1, insbesondere aufgrund eines Heckaufpralls, an der Basis 3 ab. Der Abstütznocken 126 kann jedoch auch entfallen und ist nicht zwingend erforderlich zur Lösung der Aufgabe.

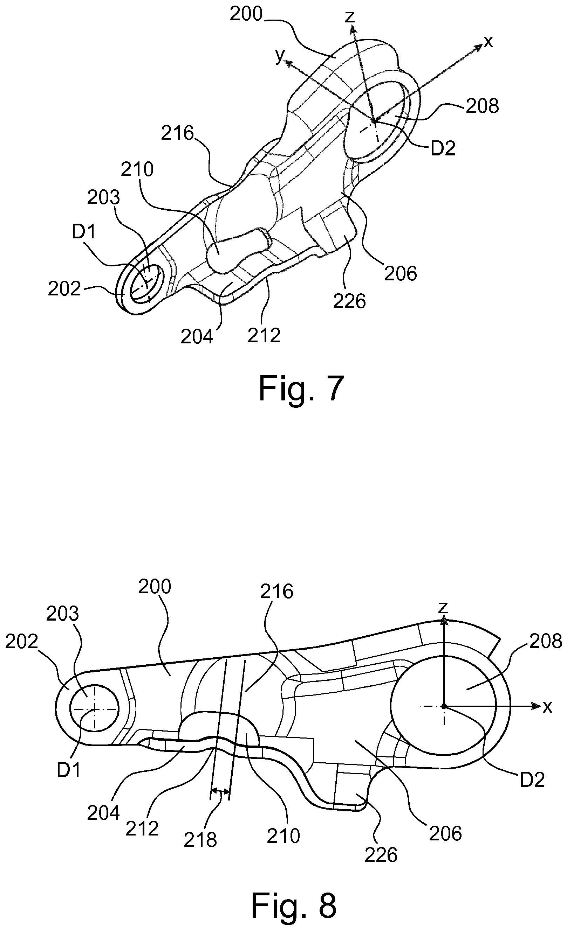

Die Figuren 7 bis 9 zeigen eine hintere Schwinge 200 eines zweiten Ausführungsbeispiels. Gleichwirkende oder ähnlich wirkende Bereiche tragen gegenüber dem ersten Ausführungsbeispiel um genau 100 höhere Bezugszeichen. Die hintere Schwinge 200 ist nachfolgend unter Verwendung des zuvor beschriebenen Schwingen-Koordinatensystems x, y, z beschrieben.

Die hintere Schwinge 200 ist ein umgeformtes Blechbauteil, vorzugsweise aus Stahlblech. Ein Lagerauge 202 ist ein weitgehend ebener, parallel zu der ersten Richtung x und parallel zu der dritten Richtung z ausgerichteter Abschnitt der hinteren Schwinge 200. Das Lagerauge 202 weist eine Lageröffnung 203 auf, deren Mittelpunkt auf der ersten Drehachse D1 liegt. Die erste Drehachse D1 der hinteren Schwinge 200 ist somit durch das Lagerauge 202 der hinteren Schwinge 200 definiert. Die hintere Schwinge 200 ist in an sich bekannter Weise mittels des Lagerauges 202 drehbar zur Basis 3, vorliegend zur ersten Schiene 11, gelagert. Dazu kann an der ersten Schiene 11 ein Lageradapter befestigt sein.

Die hintere Schwinge 200 weist zudem einen ersten Flansch 204 und einen zweiten Flansch 206 auf. Der erste Flansch 204 und der zweite Flansch 206 weisen bis auf die nachfolgend abweichend beschriebenen Abschnitte eine jeweils weitgehend ebene Gestalt auf. Der erste Flansch 204 und der zweite Flansch 206 sind zueinander abgewinkelt angeordnet. Vorliegend schließen der erste Flansch 204 und der zweite Flansch 206 einen Winkel von 90° zueinander ein.

Ausgehend von dem Lagerauge 202 erstreckt sich der zweite Flansch 206 in Richtung der zweiten Drehachse D2 und über diese hinaus. Der zweite Flansch 206 verläuft dabei weitgehend parallel zur ersten Richtung x und weitgehend parallel zur dritten Richtung z. Der zweite Flansch 206 weist eine Aufnahmeöffnung 208 auf, deren Mittelpunkt auf der zweiten Drehachse D2 liegt. Die zweite Drehachse D2 der hinteren Schwinge 200 ist somit durch die Aufnahmeöffnung 208 der hinteren Schwinge 200 definiert. Die Aufnahmeöffnung 208 nimmt das hintere Querrohr auf. Das hintere Querrohr ist in diesem Bereich mit der hinteren Schwinge 200 verschweißt.

Ausgehend von dem Lagerauge 202 erstreckt sich der erste Flansch 204 zunächst parallel zur ersten Richtung x in Richtung der Aufnahmeöffnung 208 und annähernd tangential an eine Umgrenzung der Aufnahmeöffnung 208. Der erste Flansch 204 geht dann in einen Abstütznocken 226 über, der von dem zweiten Flansch 206 ausgehend von dem zweiten Flansch 206 absteht. In der niedrigsten Höheneinstellposition des Fahrzeugsitzes 1 stützt sich der Abstütznocken 226 an der Basis 3, insbesondere der ersten Schiene 11, ab. Alternativ stützt sich der Abstütznocken 226 nur aufgrund einer Deformation des Fahrzeugsitzes 1, insbesondere aufgrund eines Heckaufpralls, an der Basis 3 ab.

Der erste Flansch 204 verläuft zwischen dem Lagerauge 202 und dem Abstütznocken 226 weitgehend parallel zur ersten Richtung x und weitgehend parallel zur zweiten Richtung y. Im weiteren Verlauf geht der erste Flansch 204 in den Abstütznocken 226 über. Der erste Flansch 204 ist in der dritten Richtung z betrachtet am unteren Ende des zweiten Flanschs 206 angeordnet. Der erste Flansch 204 und der zweite Flansch 206 sind senkrecht zueinander angeordnet. Ein dritter Flansch 230 ist in der ersten Richtung x betrachtet am hinteren Ende des zweiten Flanschs 206 angeordnet. Der dritte Flansch 230 ist in der dritten Richtung z betrachtet am oberen Ende des zweiten Flanschs 206 angeordnet. Der dritte Flansch 230 ist abschnittsweise im Bereich der Aufnahmeöffnung 208 am zweiten Flansch 206 angeordnet. Der dritte Flansch 230 und der zweiten Flansch 206 stehen annähernd senkrecht zueinander.

Zwischen dem ersten Flansch 204 und dem zweiten Flansch 206 ist abschnittweise ein Langloch 210 angeordnet, so dass der erste Flansch 204 und der zweiten Flansch 206 in diesem Abschnitt nicht miteinander verbunden sind. Das Langloch 210 erstreckt sich vorliegend über eine Länge von annähernd 20% des Abstands zwischen den Drehachsen D1, D2. Dabei ist das Langloch 210 in der ersten Richtung x betrachtet näher an der ersten Drehachse D1 als an der zweiten Drehachse D2 angeordnet. In Abwandlungen des ersten Ausführungsbeispiels sind die Länge und/oder Breite des Langlochs 210 und die Position zwischen den Drehachsen D1, D2 abweichend zum ersten Ausführungsbeispiel. Die Länge und die Breite des Langlochs 210 beeinflussen die Biegesteifigkeit der hinteren Schwinge 200 um die zweite Achse y und um die dritte Achse z.

Der erste Flansch 204 weist im Bereich des Langlochs 210 eine erste Vertiefung 212 auf. Die erste Vertiefung 212 ist eine Einbuchtung des ersten Flansches 204. Die erste Vertiefung 212 verläuft auf eine die erste Drehachse D1 mit der zweiten Drehachse D2 verbindenden imaginären Verbindungslinie zu, ohne diese zu erreichen. Die erste Vertiefung 212 wirkt unter unfallbedingter Belastung als eine Knickstelle des ersten Flanschs 204. Die erste Vertiefung 212 steuert eine Deformation der hinteren Schwinge 200 um die zweite Richtung y und eine Stauchung der hinteren Schwinge 200 in der ersten Richtung x bei unfallbedingt auftretenden Lasten, insbesondere bei einem Heckaufprall.

Der zweite Flansch 206 weist im Bereich des Langlochs 210 eine dritte Vertiefung 216 auf. Die dritte Vertiefung 216 ist eine Einbuchtung des zweiten Flanschs 206. Die dritte Vertiefung 216 ist um eine zur dritten Richtung z parallele Achse gekrümmt. Die dritte Vertiefung 216 wirkt unter unfallbedingter Belastung als eine Knickstelle des zweiten Flanschs 206. Die dritte Vertiefung 216 steuert eine Deformation der hinteren Schwinge 200 um die dritte Richtung z bei unfallbedingt auftretenden Lasten, insbesondere bei einem Heckaufprall.

Vorliegend ist die erste Vertiefung 212 gegenüber dritten Vertiefung 216 in erster Richtung x betrachtet um einen ersten Abstand 218 versetzt angeordnet. Die Größe des ersten Abstands 218 beeinflusst das Verhältnis der Deformation um die zweite Achse y und der Deformation um die dritte Achse z. Eine Distanz der ersten Vertiefung 212 zu der zweiten Drehachse D2 ist größer als eine Distanz der dritten Vertiefung 216 zu der zweiten Drehachse D2.

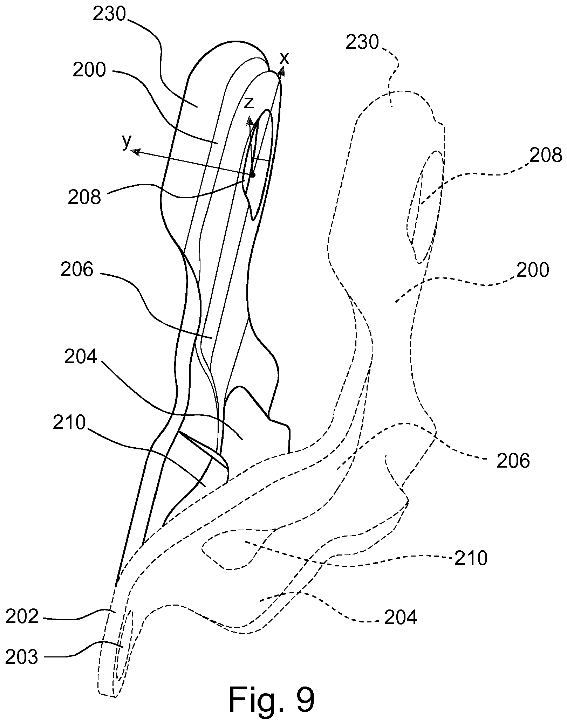

Figur 9 zeigt die hintere Schwinge 200 in einem nicht deformierten Zustand und in gestrichelter Darstellung in einem deformierten Zustand, insbesondere nach einem Heckaufprall. Man erkennt, dass im deformierten Zustand der erste Flansch 204 im Bereich des Langlochs 210 an dem zweiten Flansch 206 anliegt. Sobald während der Deformation der erste Flansch 204 und der zweite Flansch 206 aneinander anliegen, wird die Steifigkeit der hinteren Schwinge 200 sprunghaft erhöht und eine weitere Deformation der hinteren Schwinge 200 wesentlich erschwert. Zudem wird die Aufnahmeöffnung 208 und somit das hintere Querrohr entgegen der zweiten Richtung y verlagert.

Obwohl die Erfindung in den Zeichnungen und der vorausgegangenen Darstellung im Detail beschrieben wurde, sind die Darstellungen illustrativ und beispielhaft und nicht einschränkend zu verstehen. Insbesondere ist die Wahl der zeichnerisch dargestellten Proportionen der einzelnen Elemente nicht als erforderlich oder beschränkend auszulegen. Weiterhin ist die Erfindung insbesondere nicht auf die erläuterten Ausführungsbeispiele beschränkt. Weitere Varianten der Erfindung und ihre Ausführung ergeben sich für den Fachmann aus der vorangegangenen Offenbarung, den Figuren und den Ansprüchen.

In den Ansprüchen verwendete Begriffe wie "umfassen", "aufweisen", "beinhalten", "enthalten" und dergleichen schließen weitere Elemente oder Schritte nicht aus. Die Verwendung des unbestimmten Artikels schließt eine Mehrzahl nicht aus. Eine einzelne Einrichtung kann die Funktionen mehrerer in den Ansprüchen genannten Einheiten bzw. Einrichtungen ausführen.

### Bezugszeichenliste

- 1: Fahrzeugsitz
- 3: Basis
- 11: erste Schiene
- 13: zweite Schiene
- 20: Höheneinsteller
- 30: vordere Schwinge
- 40: Sitzrahmen
- 42: Sitzrahmenseitenteil
- 50: Sitzkissen
- 60: Rückenlehne
- 100, 200: hintere Schwinge
- 102, 202: Lagerauge
- 103, 203: Lageröffnung
- 104, 204: erster Flansch
- 106, 206: zweiter Flansch
- 108, 208: Aufnahmeöffnung
- 110, 210: Öffnung, Langloch
- 112, 212: erste Vertiefung
- 114: zweite Vertiefung
- 116, 216: dritte Vertiefung
- 118, 218: erster Abstand
- 120: zweiter Abstand
- 122: Aussparung
- 124: Überdeckung
- 126, 226: Abstütznocken
- 128: Sicke
- 230: dritter Flansch
- D1: erste Drehachse
- D2: zweite Drehachse
- X: Längsrichtung (des Fahrzeugkoordinatensystems)
- Z: Vertikalrichtung (des Fahrzeugkoordinatensystems)
- x: erste Richtung (des Schwingen-Koordinatensystems)
- y: zweite Richtung (des Schwingen-Koordinatensystems)
- z: dritte Richtung (des Schwingen-Koordinatensystems)

## Patentansprüche

1. Fahrzeugsitz (1), insbesondere Kraftfahrzeugsitz, mit einer Basis (3), einem Sitzkissen (50) und einem Höheneinsteller (20) zum Einstellen eines Abstandes zwischen der Basis (3) und dem Sitzkissen (50), insbesondere in einer Vertikalrichtung (Z), wobei der Höheneinsteller (20) wenigstens eine Schwinge (100, 200) aufweist, die um eine erste Drehachse (D1) relativ zu der Basis (3) drehbar ist, und sich in Richtung einer zu der ersten Drehachse (D1) parallel versetzten zweiten Drehachse (D2) erstreckt, wobei die wenigstens eine Schwinge (100, 200) zwischen der ersten Drehachse (D1) und der zweiten Drehachse (D2) wenigstens abschnittsweise einen Bereich mit einem abgewinkelten Querschnitt aufweist, wobei der abgewinkelte Querschnitt einen ersten Flansch (104, 204) und einen zweiten Flansch (106, 206) aufweist, wobei zwischen dem ersten Flansch (104, 204) und dem zweiten Flansch (106, 206) wenigstens abschnittsweise eine Öffnung (110, 210) angeordnet ist
**dadurch gekennzeichnet, dass**
die wenigstens einen Schwinge (100, 200) durch unfallbedingte Kräfte derart deformierbar ist, dass der erste Flansch (104, 204) an dem zweiten Flansch (106, 206) anliegt.

2. Fahrzeugsitz (1) nach Anspruch 1, **dadurch gekennzeichnet, dass** der Höheneinsteller (20) wenigstens eine Viergelenkkette (3, 30, 40, 100, 200) aufweist, und die wenigstens eine Schwinge (100, 200) Bestandteil der Viergelenkkette (3, 30, 40, 100, 200) ist.

3. Fahrzeugsitz (1) nach Anspruch 2, **dadurch gekennzeichnet, dass** die wenigstens eine Schwinge (100, 200) eine zwischen einer Basis (3) und einem Sitzrahmen (40) angeordnete hintere Schwinge (100, 200) ist.

4. Fahrzeugsitz (1) nach einem der Ansprüche 1 bis 3, **dadurch gekennzeichnet, dass** die wenigstens eine Schwinge (100, 200) auf der einer Fahrzeugmitte zugewandten Seite des Fahrzeugsitzes (1) angeordnet ist.

5. Fahrzeugsitz (1) nach einem der vorstehenden Ansprüche, **dadurch gekennzeichnet, dass** die Öffnung ein Langloch (110, 210) ist.

6. Fahrzeugsitz (1) nach Anspruch 5, **dadurch gekennzeichnet, dass** das Langloch (110, 210) weitgehend parallel zu einer die erste Drehachse (D1) mit der zweiten Drehachse (D2) verbindenden imaginären Verbindungslinie ausgerichtet ist, wobei die imaginäre Verbindungslinie eine erste Richtung (x) eines Schwingen-Koordinatensystems (x, y, z) definiert.

7. Fahrzeugsitz (1) nach Anspruch 6, **dadurch gekennzeichnet, dass** der zweite Flansch (106, 206) überwiegend parallel zu einer aus der ersten Richtung (x) und einer dritten Richtung (z) aufgespannten Ebene verläuft.

8. Fahrzeugsitz (1) nach einem der vorstehenden Ansprüche, **dadurch gekennzeichnet, dass** der erste Flansch (104, 204) wenigstens abschnittsweise senkrecht zu dem zweiten Flansch (106, 206) angeordnet ist.

9. Fahrzeugsitz (1) nach einem der vorstehenden Ansprüche, **dadurch gekennzeichnet, dass** die Steifigkeit sprungartig ansteigt, wenn der erste Flansch (104, 204) und der zweite Flansch (106, 206) sich gegenseitig abstützen.

10. Fahrzeugsitz (1) nach einem der vorstehenden Ansprüche, **dadurch gekennzeichnet, dass** die wenigstens eine Schwinge (100, 200) durch unfallbedingte Kräfte derart deformierbar ist, dass sich ein zwei hintere Schwingen (100, 200) verbindendes Querrohr während einer Deformation des Fahrzeugsitzes (1) in Richtung der Sitzmitte verschiebt

11. Fahrzeugsitz (1) nach einem der vorstehenden Ansprüche, **dadurch gekennzeichnet, dass** der erste Flansch (104, 204) eine erste Vertiefung (112, 212) aufweist.

12. Fahrzeugsitz (1) nach Anspruch 11, **dadurch gekennzeichnet, dass** die erste Vertiefung (112, 212) zu einer imaginären Verbindungslinie, die die erste Drehachse (D1) mit der zweiten Drehachse (D2) verbindet, hin orientiert ist.

13. Fahrzeugsitz (1) nach Anspruch 12, **dadurch gekennzeichnet, dass** der erste Flansch (104) im Bereich der ersten Vertiefung (112) zusätzlich in oder entgegen einer zweiten Richtung (y) durch eine zweite Vertiefung (114) gekrümmt ist.

14. Fahrzeugsitz (1) nach einem der vorstehenden Ansprüche, **dadurch gekennzeichnet, dass** der zweite Flansch (106, 206) eine dritte Vertiefung (116, 216) aufweist, die in eine zweite Richtung (y) gekrümmt ist.

## Claims

1. Vehicle seat (1), in particular motor vehicle seat, with a base (3), a seat cushion (50) and a height adjuster (20) for adjusting a distance between the base (3) and the seat cushion (50), in particular in a vertical direction (Z), wherein the height adjuster (20) has at least one rocker (100, 200) which is rotatable about a first axis of rotation (D1) relative to the base (3) and extends in the direction of a second axis of rotation (D2) which is offset parallel to the first axis of rotation (D1), wherein the at least one rocker (100, 200) has a region with an angled cross section at least in sections between the first axis of rotation (D1) and the second axis of rotation (D2), wherein the angled cross section has a first flange (104, 204) and a second flange (106, 206), wherein an opening (110, 210) is arranged at least in sections between the first flange (104, 204) and the second flange (106, 206),
**characterized in that**
the at least one rocker (100, 200) is deformable by accident-induced forces in such a manner that the first flange (104, 204) lies against the second flange (106, 206).

2. Vehicle seat (1) according to Claim 1, **characterized in that** the height adjuster (20) has at least one four-bar-linkage chain (3, 30, 40, 100, 200), and the at least one rocker (100, 200) is part of the four-bar-linkage chain (3, 30, 40, 100, 200).

3. Vehicle seat (1) according to Claim 2, **characterized in that** the at least one rocker (100, 200) is a rear rocker (100, 200) which is arranged between a base (3) and a seat frame (40).

4. Vehicle seat (1) according to one of Claims 1 to 3, **characterized in that** the at least one rocker (100, 200) is arranged on that side of the vehicle seat (1) which faces a vehicle centre.

5. Vehicle seat (1) according to one of the preceding claims, **characterized in that** the opening is an elongated hole (110, 210).

6. Vehicle seat (1) according to Claim 5, **characterized in that** the elongated hole (110, 210) is oriented substantially parallel to an imaginary connecting line connecting the first axis of rotation (D1) to the second axis of rotation (D2), wherein the imaginary connecting lines define a first direction (x) of a rocker system of coordinates (x, y, z).

7. Vehicle seat (1) according to Claim 6, **characterized in that** the second flange (106, 206) runs predominantly parallel to a plane formed from the first direction (x) and a third direction (z).

8. Vehicle seat (1) according to one of the preceding claims, **characterized in that** the first flange (104, 204) is arranged at least in sections perpendicular to the second flange (106, 206).

9. Vehicle seat (1) according to one of the preceding claims, **characterized in that** the rigidity abruptly increases when the first flange (104, 204) and the second flange (106, 206) are supported on each other.

10. Vehicle seat (1) according to one of the preceding claims, **characterized in that** the at least one rocker (100, 200) is deformable by accident-induced forces in such a manner that a transverse tube connecting two rear rockers (100, 200) is displaced in the direction of the seat centre during a deformation of the vehicle seat (1).

11. Vehicle seat (1) according to one of the preceding claims, **characterized in that** the first flange (104, 204) has a first depression (112, 212).

12. Vehicle seat (1) according to Claim 11, **characterized in that** the first depression (112, 212) is oriented towards an imaginary connecting line which connects the first axis of rotation (D1) to the second axis of rotation (D2).

13. Vehicle seat (1) according to Claim 12, **characterized in that** the first flange (104) in the region of the first depression (112) is additionally curved in or counter to a second direction (y) by a second depression (114).

14. Vehicle seat (1) according to one of the preceding claims, **characterized in that** the second flange (106, 206) has a third depression (116, 216) which is curved in a second direction (y).

## Revendications

1. Siège de véhicule (1), en particulier siège de véhicule automobile, avec une base (3), un coussin de siège (50) et un système d'ajustement en hauteur (20) pour l'ajustement d'une distance entre la base (3) et le coussin de siège (50), en particulier dans une direction verticale (Z), dans lequel le système d'ajustement en hauteur (20) présente au moins une bascule (100, 200), qui peut tourner autour d'un premier axe de rotation (D1) par rapport à la base (3), et s'étend en direction d'un second axe de rotation (D2) décalé parallèlement par rapport au premier axe de rotation (D1), dans lequel ladite au moins une bascule (100, 200) présente au moins en partie une région avec une section transversale coudée, dans lequel la section transversale coudée présente une première bride (104, 204) et une seconde bride (106, 206), dans lequel une ouverture (110, 210) est disposée au moins en partie entre la première bride (104, 204) et la seconde bride (106, 206), **caractérisé en ce que** ladite au moins une bascule (100, 200) peut être déformée par des forces dues à un accident, de telle manière que la première bride (104, 204) s'applique sur la seconde bride (106, 206).

2. Siège de véhicule (1) selon la revendication 1, **caractérisé en ce que** le système d'ajustement en hauteur (20) présente au moins une chaîne à quatre articulations (3, 30, 40, 100, 200), et ladite au moins une bascule (100, 200) fait partie de la chaîne à quatre articulations (3, 30, 40, 100, 200).

3. Siège de véhicule (1) selon la revendication 2, **caractérisé en ce que** ladite au moins une bascule (100, 200) est une bascule arrière (100, 200) disposée entre une base (3) et un châssis de siège (40).

4. Siège de véhicule (1) selon l'une quelconque des revendications 1 à 3, **caractérisé en ce que** ladite au moins une bascule (100, 200) est disposée sur le côté du siège de véhicule (1) tourné vers un milieu du véhicule.

5. Siège de véhicule (1) selon l'une quelconque des revendications précédentes, **caractérisé en ce que** l'ouverture est un trou oblong (110, 210).

6. Siège de véhicule (1) selon la revendication 5, **caractérisé en ce que** le trou oblong (110, 210) est orienté largement parallèlement à une ligne de liaison imaginaire reliant le premier axe de rotation (D1) au second axe de rotation (D2), dans lequel la ligne de liaison imaginaire définit une première direction (x) d'un système de coordonnées de bascule (x, y, z).

7. Siège de véhicule (1) selon la revendication 6, **caractérisé en ce que** la seconde bride (106, 206) s'étend principalement parallèlement à un plan défini par la première direction (x) et une troisième direction (z).

8. Siège de véhicule (1) selon l'une quelconque des revendications précédentes, **caractérisé en ce que** la première bride (104, 204) est disposée au moins en partie perpendiculairement à la seconde bride (106, 206).

9. Siège de véhicule (1) selon l'une quelconque des revendications précédentes, **caractérisé en ce que** la rigidité augmente brusquement, lorsque la première bride (104, 204) et la seconde bride (106, 206) se soutiennent mutuellement.

10. Siège de véhicule (1) selon l'une quelconque des revendications précédentes, **caractérisé en ce que** ladite au moins une bascule (100, 200) est déformable par des forces dues à un accident, de telle manière qu'un tube transversal reliant deux bascules arrière (100, 200) se déplace en direction du milieu de siège pendant une déformation du siège de véhicule (1).

11. Siège de véhicule (1) selon l'une quelconque des revendications précédentes, **caractérisé en ce que** la première bride (104, 204) présente un premier creux (112, 212).

12. Siège de véhicule (1) selon la revendication 11, **caractérisé en ce que** le premier creux (112, 212) est orienté vers une ligne de liaison imaginaire, qui relie le premier axe de rotation (D1) au second axe de rotation (D2).

13. Siège de véhicule (1) selon la revendication 12, **caractérisé en ce que** la première bride (104) est incurvée dans la région du premier creux (112) en outre dans ou à l'inverse d'une deuxième direction (y) par un deuxième creux (114).

14. Siège de véhicule (1) selon l'une quelconque des revendications précédentes, **caractérisé en ce que** la seconde bride (106, 206) présente un troisième creux (116, 216), qui est incurvé dans une deuxième direction (y).
